(19) Europäisches Patentamt
European Patent Office
Office européen des brevets

(11) **EP 2 702 368 B1**

(12) **FASCICULE DE BREVET EUROPEEN**

(45) Date de publication et mention
de la délivrance du brevet:
**14.10.2020 Bulletin 2020/42**

(21) Numéro de dépôt: **12718973.6**

(22) Date de dépôt: **27.04.2012**

(51) Int Cl.:
*G01F 1/38* (2006.01)          *G01R 7/16* (2006.01)

(86) Numéro de dépôt international:
**PCT/EP2012/057855**

(87) Numéro de publication internationale:
**WO 2012/146756 (01.11.2012 Gazette 2012/44)**

(54) **MICRODEBITMETRE ET SON PROCEDE DE REALISATION**

MIKRODURCHFLUSSMESSER UND VERFAHREN ZU SEINER HERSTELLUNG

MICRO FLOW METER AND METHOD FOR PRODUCING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2011 FR 1153646**

(43) Date de publication de la demande:
**05.03.2014 Bulletin 2014/10**

(73) Titulaire: **Commissariat à l'Énergie Atomique et aux Énergies Alternatives
75015 Paris (FR)**

(72) Inventeurs:
• **FOUILLET, Yves**
  **38340 Voreppe (FR)**
• **BOURGERETTE, Alain**
  **38190 Villard-Bonnot (FR)**
• **FUCHS, Olivier**
  **38000 Grenoble (FR)**

(74) Mandataire: **Ahner, Philippe et al
BREVALEX
95, rue d'Amsterdam
75378 Paris Cedex 8 (FR)**

(56) Documents cités:
**EP-A1- 1 236 974      WO-A2-2007/143258**

• **VAN DER WIE A J ET AL: "A Bi-directional Silicon Orifice Flow Sensor Characterised For Fluid Temperature And Pressure", 19950625; 19950625 -19950629, vol. 2, 25 juin 1995 (1995-06-25), pages 420-423, XP010305091,**
• **LIU YAXIN ET AL: "A MEMS Flow Sensor and Its Application in Adaptive Liquid Dispensing", MEASURING TECHNOLOGY AND MECHATRONICS AUTOMATION, 2009. ICMTMA '09. INTERNATIONAL CONFERENCE ON, IEEE, PISCATAWAY, NJ, USA, 11 avril 2009 (2009-04-11), pages 3-7, XP031511148, DOI: 10.1109/ICMTMA.2009.329 ISBN: 978-0-7695-3583-8**

## Description

## DOMAINE TECHNIQUE ET ART ANTÉRIEUR

La présente invention concerne les techniques de mesure de débits d'un fluide. Elle concerne notamment un dispositif ou microdispositif et son procédé de réalisation, mettant en œuvre une mesure de débit à l'aide d'un pont de Wheatstone permettant de mesurer un différentiel de pression entre deux chambres.

Il existe de nombreuses méthodes pour mesurer les débits (fil chaud, effet Coriolis...).

Une méthode efficace, précise et simple consiste à utiliser deux capteurs de pression disposés consécutivement dans un passage fluidique et séparés par une restriction fluidique. La différence de pression (appelée perte de charge) induite par la dissipation visqueuse dans la restriction fluidique est mesurée par les deux capteurs de pression. Il y a une relation de proportionnalité connue entre le débit et la différence de pression. Ainsi, la mesure de la différence de pression permet de déterminer le débit.

Un exemple de débitmètre formé de deux capteurs de pression distincts est illustré en figure 1 et est décrit dans les documents US6446513B1, US20050204828A1 ainsi que dans l'article de R. E. Oosterbroek et al., paru dans Sensor Actuat a-Phys 77, 167 (1999). Le fluide passe par un canal central 56 après être entré par une ouverture d'entrée 51 disposée dans la partie inférieure du dispositif. Il ressort par une ouverture de sortie 54, également disposée dans la partie inférieure du dispositif. Des capteurs piézo-résistifs 58, 60 permettent de mesurer les variations de pression, d'une part dans la partie d'entrée, en amont du canal 56, d'autre part dans la partie de sortie, en aval du canal 56. Le dispositif est réalisé à l'aide de deux substrats 62, 64, les canaux d'entrée 52 et de sortie 54 étant réalisés dans le substrat 62 inférieur, le canal central étant quant à lui réalisé dans la partie inférieure du substrat supérieur 64, dans lequel deux canaux traversant permettent un accès aux capteurs piézo-résistifs, respectivement du côté de l'entrée et du côté de la sortie du dispositif.

Une autre configuration consiste à utiliser un seul capteur de pression différentiel, chaque face d'une membrane formant le capteur de pression étant en regard de chambres séparées par une perte de charge. Un exemple en est décrit dans l'article de Cho et al., 1993, intitulé « a high-performance microflowmeter with built-in self test », paru dans Sensors and Actuators A: Physical 36:47-56. Cependant, pour des raisons d'isolation électrique il est préférable de bien séparer les moyens de mesure (le capteur et les moyens électriques) des parties fluidiques. Les moyens de mesure étant sur l'une des faces de la membrane du capteur de pression, il n'est pas possible d'utiliser une configuration avec un capteur différentiel, qui implique nécessairement la mise en contact du fluide avec ces deux faces. Pour des raisons d'architecture, il est aussi préférable de séparer les niveaux électriques des niveaux fluidiques.

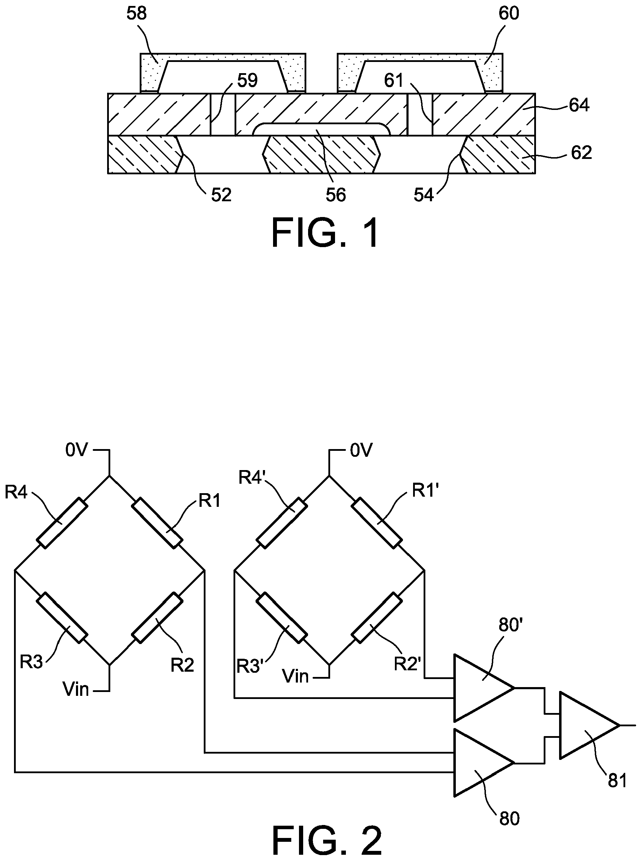

On connait par ailleurs des montages électriques, à ponts de Wheastone, chaque pont comportant 4 résistances R1 - R4 et R'1 - R'4, comme illustré en figure 2, qui montre également les connexions électriques impliquées par un tel système.

Ce montage nécessite au moins 8 plots 76 de connexion.

En outre, la chaine de mesure d'un pont de Wheatstone implique une électronique formée par plusieurs composants, notamment un amplificateur électrique, et un convertisseur analogique/numérique. Avec deux ponts, comme sur la figure 2, il faut amplifier deux mesures et en déterminer la différence. Celle-ci peut être calculée après conversion analogique mais, pour minimiser la dégradation de l'information il est préférable de déterminer la différence avant la conversion analogique. La chaine de mesure implique donc au moins 3 amplificateurs différentiels 80, 80', 81. Or chaque amplificateur doit être alimenté. Ce type de montage est donc encombrant et implique une consommation électrique importante.

Il se pose donc le problème de trouver un nouveau dispositif de mesure de débit, permettant de réduire les inconvénients expliqués ci-dessus pour les dispositifs de l'art antérieur.

L'article de A J Van der Wie et al. Intittulé « a bi directional silicon orifice flow sensor for fluid temperature and pressure » vol.2, 25 juin 1995, pages 420-423, décrit un capteur bidirectionnel de flux, à orifice, en silicium, caractérisé pour la température et la pression d'un fluide.

Le document WO2007/143258 décrit un débitmètre à oscillation, en céramique, comportant des capteurs résistifs à cuisson simultanée.

Le document EP 1236974 décrit un dispositif pour mesurer une pression en deux points d'un écoulement fluidique.

L'article de Liu Yaxin « A MEMS flow sensor and its application in adaptative liquid dispensing », MEASURING TECHNOLOGY AND MECHATRONICS AUTOMATION 2009, ICMTMA '09, IEEE, Piscateway, NJ, USA, 11 Avril 2009, pages 3-7, décrit un capteur MEMS rapide.

## EXPOSÉ DE L'INVENTION

Un premier aspect de l'invention concerne un microdébitmètre, qui peut être de type MEMS, selon la revendication 1.

Chaque jauge est apte à fournir un signal caractéristique d'une déformation de la membrane correspondante, déformation se produisant sous l'action de l'écoulement d'un fluide dans le microdébitmètre.

Les quatre jauges forment un pont de Wheatstone permettant de mesurer un différentiel de pression entre la première chambre et la deuxième chambre lorsqu'un fluide s'écoule par la première chambre, puis par le canal, puis par la deuxième chambre.

Un tel microdébitmètre peut être intégré en un seul composant.

Il comporte deux membranes, chacune en regard d'une cavité, les deux cavités étant séparées par une perte de charge formée par un petit canal de petite section. Un tel dispositif comporte en outre des moyens de mesure sous la forme d'un pont de Wheastone comportant 2 jauges associées à, ou sur, la première membrane et 2 jauges associées à, ou sur, la deuxième membrane. Un seul pont de Wheatstone permet de réaliser la mesure du débit d'un fluide circulant dans le microdébitmètre.

L'utilisation d'un pont de Wheatstone comportant des résistances disposées dans les deux chambres permet de simplifier l'ensemble du câblage électrique ainsi qu'une réduction de l'énergie consommée par la mesure.

Dans un tel dispositif, l'une des jauges de chaque membrane est avantageusement placée suivant une direction perpendiculaire à la direction générale d'écoulement d'un fluide dans le dispositif, tandis que l'autre jauge est placée suivant une direction sensiblement parallèle à cette direction générale d'écoulement du fluide dans le dispositif. Une telle disposition permet d'assurer une mesure très sensible.

De préférence encore, chacune des jauges est localisée au voisinage de l'encastrement ou du bord de la membrane correspondante.

Un tel dispositif peut comporter en outre des moyens de mesure, comportant des moyens amplificateurs, ou un amplificateur unique, auxquels, ou auquel, sont connectés 2 sommets du pont qui ne sont pas disposés de manière voisine dans le pont. On peut ainsi réaliser une mesure différentielle, ce qui permet de réduire les risques de dégradation de l'information et de minimiser l'incertitude de mesure.

On décrit également dans la présente demande un procédé de réalisation d'un microdébitmètre du type décrit ci-dessus, comportant les étapes suivantes :

a) on sélectionne un premier substrat et un deuxième substrat,
b) on réalise la première chambre, la deuxième chambre et le canal dans le deuxième substrat,
c) on assemble le premier substrat avec le deuxième substrat,
d) puis on réalise une membrane déformable, par amincissement du premier substrat,
e) on forme les 4 jauges, formant un pont de Wheastone, sur ou dans ladite membrane, deux des jauges étant positionnées au-dessus de la première chambre et les deux autres jauges étant positionnées au-dessus de la deuxième chambre.

Dans le procédé ci-dessus, la membrane déformable peut être réalisée par amincissement du premier substrat à partir de la face supérieure de celui-ci, par polissage mécanique, ou par polissage mécano-chimique et/ou par gravure.

Le premier substrat peut être de type SOI, comportant un substrat semi-conducteur, une couche diélectrique et une couche en matériau semi-conducteur.

La couche diélectrique peut servir de couche d'arrêt lors de l'amincissement de ce premier substrat.

Un tel procédé peut comporter en outre une étape de réalisation de conduits d'entrée et de sortie dans le deuxième substrat. Ces conduits peuvent être d'abord réalisés borgnes, dans le deuxième substrat, puis être rendus traversant après l'étape e), par amincissement du deuxième substrat.

L'étape d'assemblage est de préférence réalisée par scellement moléculaire, par scellement anodique, eutectique, ou par collage.

Elle peut être réalisée sous vide.

Les jauges peuvent quant à elle être réalisées par dépôt métallique sur la membrane ou par dopage d'un matériau semi-conducteur.

Dans un dispositif ou un procédé tel que décrit dans la présente demande, on cherchera de préférence à ce que les 4 jauges du pont de Wheastone soient de forme allongée et ne soient pas toutes parallèles les unes des autres, et/ou à ce que les 2 jauges du pont et d'une même membrane ne soient pas parallèles entre elles, et/ou à ce que le pont de Wheastone comporte deux jauges successives parallèles l'une par rapport à l'autre.

**BRÈVE DESCRIPTION DES DESSINS**

On décrira à présent, à titre d'exemples non limitatifs, des modes de réalisation de l'invention, en se référant aux dessins annexés, dans lesquels :

la figure 1, déjà décrite, est une vue en coupe transversale d'un microdébitmètre selon un exemple de l'art antérieur,

la figure 2 est une vue schématique, d'un schéma électrique,

les figures 3, 4A et 4B, 4C sont des vues schématiques, respectivement d'un microdébitmètre selon la présente invention (figures 3, 4A, 4C), et du schéma électrique de montage des capteurs associés à ce microdébitmètre (figure 4B),

la figure 5 est une vue schématique, de dessus, une variante d'un microdébitmètre selon la présente invention,

les figures 6A - 6F représentent schématiquement diverses étapes d'un procédé de réalisation d'un microdébitmètre selon la présente invention.

## EXPOSÉ DÉTAILLÉ DE MODES DE RÉALISATION PARTICULIERS

Dans la suite, lorsqu'on parle de « substrat » on peut également comprendre une « couche».

Par conséquent on utilise indifféremment l'un ou l'autre de ces termes.

Il est à noter que, sur les dessins, les échelles ne sont pas respectées, pour privilégier la clarté du dessin.

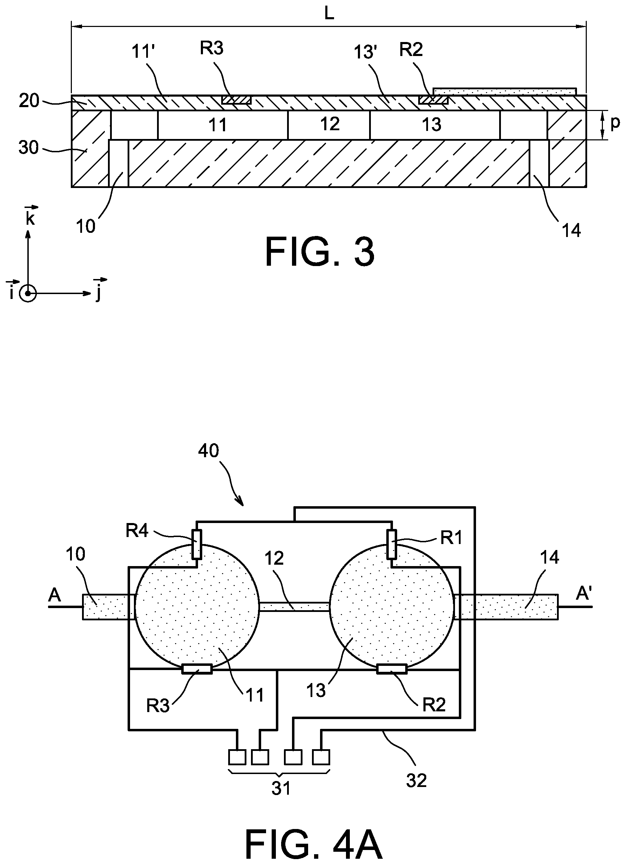

Dans toute la description qui va suivre, on utilise un repère orthonormé ($i$, $j$, $k$), comme représenté sur la figure 3.

Par ailleurs, les termes « inférieur » et « supérieur » utilisés par la suite sont ici à comprendre en termes d'orientation suivant la direction $k$ du repère orthonormé ($i$, $j$, $k$).

Les termes « épaisseur », « hauteur » et « profondeur » sont à comprendre en termes de mesure ou de distance suivant la direction $k$ du même repère orthonormé ($i$, $j$, $k$.) .

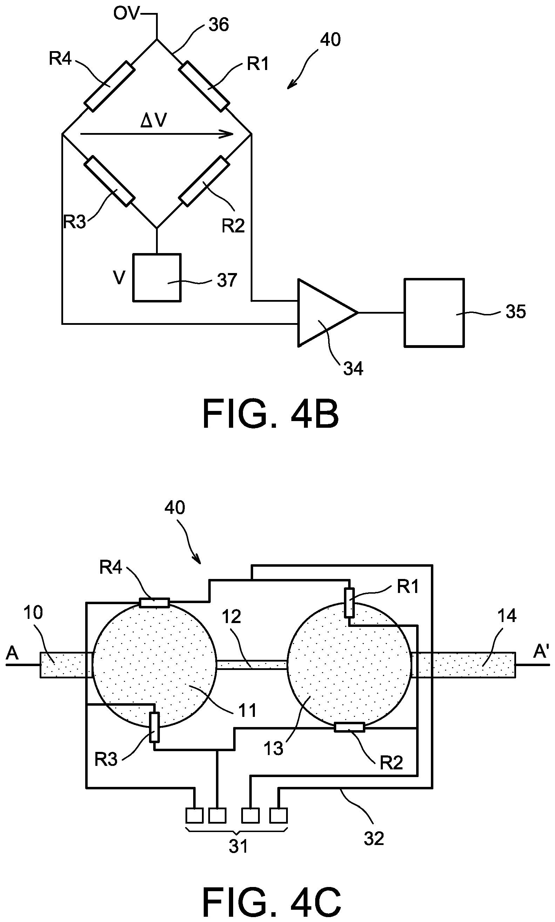

Un premier exemple de structure selon l'invention est illustré en figures 3 et 4A-4C. La figure 3 est une vue en coupe le long d'un plan dont on voit la trace AA' en figure 4A ou 4C (vues de dessus). Les vues des figures 4A et 4C sont des variantes de disposition des résistances du pont.

Un tel dispositif comporte 2 membranes 11', 13' disposées en regard de 2 cavités (ou chambres) 11, 13. Ces dernières sont reliées entre elles par un petit canal 12 de petite section. Ce canal va imposer une perte de charge à un liquide qui circule depuis une entrée 10, puis dans la première cavité 11, et passe ensuite dans la deuxième cavité 13 pour être dirigé vers un orifice de sortie 14.

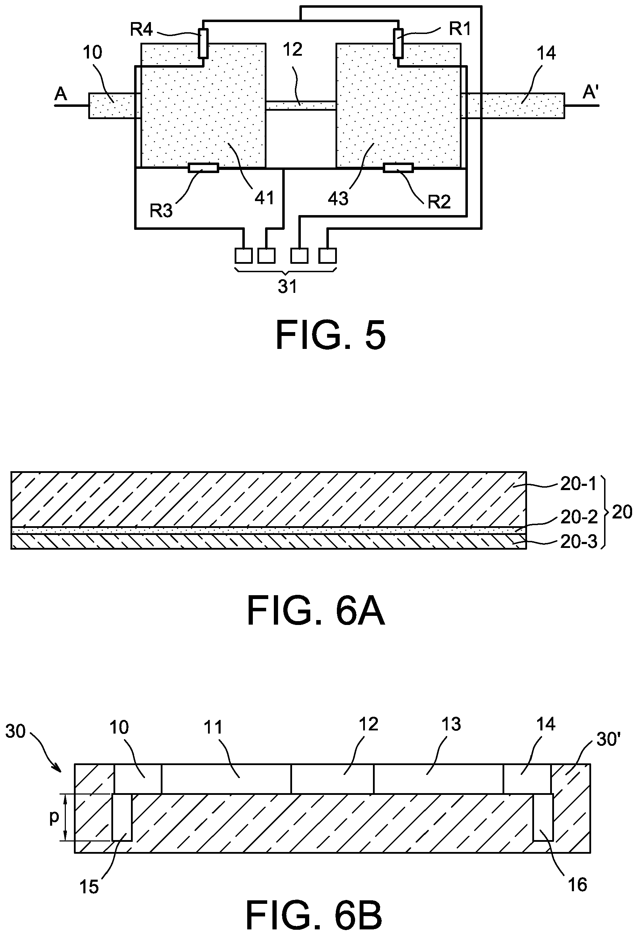

Les cavités 11, 13 peuvent chacune avoir, dans le plan ij, ou plan du dispositif, une forme circulaire ou une forme de disque (clairement représentée en figures 4A, 4C), dont le diamètre peut être de l'ordre de quelques millimètres, par exemple compris entre 1 mm et 10 mm. En variante ces cavités peuvent être carrées ou rectangulaires, cette variante est représentée schématiquement en figure 5 et sera commentée plus loin.

Les cavités ont une profondeur p, mesurée suivant la direction k, de l'ordre de quelques microns à quelques centaines de microns, par exemple comprise entre 10 $\mu$m ou 50$\mu$m et 100$\mu$m. De préférence les profondeurs, mesurées suivant la direction k, des différents canaux 10, 11, 12, 13, 14 sont voisines ou identiques. Pour former une restriction plus étroite la profondeur du canal 12 pourra être inférieure à celle des cavités 11, 13. La perte de charge produite par la restriction est d'autant plus grande que la restriction est de faible section. Ainsi, la différence de pression du fluide dans les chambres 11 et 13 est d'autant plus élevée. Cela accroît la précision de la mesure du débit du fluide entre les deux chambres, comme cela sera ultérieurement décrit.

Le canal 12 peut avoir une largeur, mesurée suivant un axe parallèle à l'axe j, perpendiculaire à la direction de circulation d'un fluide dans le dispositif, de quelques dizaines de microns, par exemple comprise entre 10 $\mu$m et 50$\mu$m, alors que les autres canaux de communication 10, 14 ont de préférence une plus grande largeur, de l'ordre de quelques centaines de microns, par exemple comprise entre 100 $\mu$m et 500 $\mu$m.

Une telle structure peut être réalisée dans 2 substrats 20, 30 superposés et assemblés entre eux.

Chacun de ces substrats a une épaisseur par exemple comprise entre 100 $\mu$m et quelques centaines de $\mu$m, par exemple entre 100 $\mu$m et 500 $\mu$m.

Chacun de ces substrats s'étend dans le plan ij, perpendiculairement à l'axe k. Pour cette raison, on appelle également le plan ij plan du dispositif ou plan principal du dispositif. L'axe j est dans le sens de circulation d'un fluide dans le dispositif et l'axe i lui est perpendiculaire. L'épaisseur de chaque substrat, mesurée suivant cet axe z, peut, dans certains cas, être très petite devant les extensions latérales du dispositif, c'est-à-dire devant les dimensions L et l de dispositif mesurées dans le plan ij ; L (mesurée selon l'axe j) est par exemple comprise entre quelques mm, par exemple 2 mm ou 5 mm, et quelques cm par exemple 2 cm ou 5 cm et l (mesurée selon l'axe i) est par exemple comprise entre quelques mm, par exemple 2 mm ou 5 mm, et quelques cm, par exemple 2 cm ou 5 cm. Les substrats 20, 30 peuvent être chacun en un matériau semi-conducteur, par exemple en silicium ou en un autre matériau tel qu'un verre, ou un métal, ou un polymère, ou un plastique. Le Silicium est préféré car il est compatible avec des microtechnologies de fabrication collectives et précises. De plus, ce matériau a de bonnes propriétés mécaniques de résistance et de vieillissement. Dans le cas où le matériau est du Silicium, les substrats sont liés entre eux par exemple par assemblage moléculaire, ou par collage, par exemple collage par sérigraphie. Le scellement moléculaire a l'avantage de ne pas nécessiter l'ajout d'une colle.

Une mesure de perte de charge d'un fluide est réalisée à l'aide d'un pont de Wheatstone 40 comportant 2 jauges (R3,R4) sur, ou dans, la première membrane 11' et 2 jauges (R1,R2) sur, ou dans, la deuxième membrane 13' .

Ces jauges sont de préférence en un matériau conducteur ou en un matériau semi-conducteur dopé. Elles sont par exemple en or, ou en aluminium, ou en titane, ou en platine, ou en un alliage (par exemple AlSi) . De préférence, on choisit un matériau conducteur présentant un facteur de jauge élevé, par exemple le platine. En variante elles sont réalisées en un matériau semi-conducteur dopé tel que, par exemple, le silicium dopé p obtenu par implantation d'ions bore. Un capteur réalisé à l'aide de jauges en matériau semiconducteur (par exemple du silicium dopé Bore à un dosage de quelques $10^{19}at.cm^{-3}$) offre une sensibilité 50 à 100 fois plus grande qu'un capteur utilisant des jauges métalliques.

Chacune des jauges peut être de forme allongée, avec une largeur de quelques microns, pouvant être comprise entre 1 $\mu$m et 9 $\mu$m ou 10 $\mu$m, et une longueur de quelques dizaines de microns, pouvant être comprise entre 10 $\mu$m et 100 $\mu$m.

Les 4 résistances R1, R2, R3, R4 ont de préférence des valeurs nominales (c'est-à-dire sans déformation) identiques R0.

De préférence encore, l'orientation de ces 4 jauges de contraintes est telle que la mesure du débit soit la plus sensible. Par exemple, si les membranes 11', 13' ont chacune une forme circulaire, représentée en figure 4A ou 4C, l'une des jauges de chaque membrane est placée sur une direction radiale de celle-ci (R4 ou R1 sur la figure 4A ; R3 ou R1 sur la figure 4C) , tandis que la deuxième (R2 ou R3 sur la figure 4A ; R4 ou R2 sur la figure 4C) est placée suivant une direction angulaire, ou est placée de manière à former, en projection sur un plan défini par le couple de vecteurs (i, j), ou sur un plan parallèle au plan principal du dispositif, un angle, ici sensiblement voisin d'un angle droit, avec la limite de la zone d'encastrement ou le contour de la membrane, en l'occurrence avec le rayon du cercle formé par la membrane, à l'endroit où cette jauge est disposée.

D'une façon générale, quelle que soit la forme de la membrane, il est préférable que les résistances ne soient pas toutes parallèles les unes des autres.

Il est préférable que les résistances disposées sur ou dans une même membrane ne soient pas parallèles entre elles. Elles sont avantageusement perpendiculaires l'une par rapport à l'autre. Par exemple, une membrane peut comporter une résistance orientée radialement, l'autre résistance étant orientée selon tangentiellement, comme en figure 4A ou 4C. Mais d'autres configurations sont possibles, avec deux jauges associées à une même cavité faisant entre elles un angle strictement supérieur à 0° et strictement inférieur ou égal à 90°, les deux jauges de l'autre cavité faisant entre elles un angle strictement supérieur à 0° et strictement inférieur ou égal à 90°.

De préférence, le pont de Wheastone formé par les quatre résistances comporte deux résistances successives parallèles l'une par rapport à l'autre. C'est le cas en figures 4A et 4B où les 2 résistances R2 et R3, disposées successivement dans le pont, sont parallèles entre elles, de même que les 2 résistances R1 et R4.

Comme on le voit sur les figure 4A, 4B ou 4C, les jauges R1 - R4 sont reliées entre elles par des lignes électriques 36, de manière à ce que l'ensemble forme un pont de Wheastone. Les sommets du pont sont reliés à des plots de contact 31, ce qui permet de connecter le microdébitmètre à un système électronique de mesure 34, 35, comportant un amplificateur 34 et, éventuellement, des moyens de mémorisation et/ou de traitement des données, par exemple des moyens de type microprocesseur, par exemple encore des moyens informatiques. Un écran de visualisation (non représentés sur les figures) permet à un opérateur de voir l'évolution de données de débit au cours de la circulation d'un fluide.

Les 2 membranes 11', 13' sont de préférence identiques (même géométrie, même dimension, même raideur). Comme on le voit en figure 4A ou 4C, la projection, sur un plan parallèle au plan défini par les axes (i, j), ou sur un plan parallèle au plan principal du dispositif, chacune des jauges est de préférence localisée au voisinage du bord, ou de l'encastrement (dans le substrat dans lequel elle est réalisée) de la membrane correspondante, là où la contrainte est maximum.

Dans le cas où le matériau des substrats dans lesquels le dispositif est réalisé est du silicium, les jauges de contraintes sont de préférence orientées suivant les directions <010> du réseau cristallin du silicium. Cela permet de maximiser l'effet piézoresistif : les jauges sont alors plus sensibles.

D'autres capteurs de déformations peuvent être présents sur, ou dans, les membranes 11', 13', par exemple afin de mesurer la pression dans l'une ou l'autre des membranes.

Lorsqu'un fluide s'écoule dans l'ensemble du réseau formée par l'entrée 10, la première chambre 11, le canal 12, la deuxième chambre 13, et la sortie 14, la perte de charge générée par la restriction 12 induit une différence de pression entre les cavités 11 et 13.

Si on désigne par Pa et Pb les pressions respectives dans les chambres 11 et 13, la perte de charge générée dans la restriction 12 est de préférence plus grande que la perte de charge générée dans les autres canaux de communication d'entrée et de sortie 10, 14.

A titre d'exemple on rappelle que pour un canal a section carré de coté d, et de longueur L la perte de charge

s'écrit: $\Delta P = 28,4 \dfrac{\mu L}{d^2} \langle Q \rangle$ où $\mu$ est la viscosité du liquide et Q est le débit de l'écoulement. Pour simplifier on utilisera la relation suivante :

$$Pa - Pb = \alpha Q \ , \qquad\qquad (eq \ 1)$$

où Q désigne le débit dans le microdébitmètre et $\alpha$ un coefficient fonction de la géométrie de la restriction 12 et de la viscosité du fluide. Cette formule est donc applicable pour toute géométrie de la section du canal suivant l'axe j (ou dans le plan ik).

Sous l'action de la pression, les membranes 11', 13' en regard de chaque cavité 11, 13 se déforment. Le matériau formant les membranes ayant un comportement sensiblement élastique, on a, au premier ordre, une relation linéaire entre la pression et la déformation des membranes, et donc une relation linéaire entre la variation relative des résistances des jauges et la pression des cavités.

Soit K cette relation de proportionnalité ( $\frac{\Delta R}{R} = KP$ ). La valeur de K est fonction de la raideur des membranes, de la position des jauges, et des propriétés piezorésistives des jauges. Le coefficient K dépend aussi de l'orientation des jauges. Les jauges qui sont disposée suivant des orientations respectives axiale et angulaires (comme expliqué ci-dessus en liaison avec la figure 4A) présentent des coefficients K de signes opposés. Ainsi pour les résistances de la première membrane 11', soumise à une pression Pa, on a, respectivement pour une 1ère résistance R4 disposée radialement et pour une 2ème résistance R3 disposée sensiblement à 90° de la 1ère:

$$R4 = R0(1 - KPa)$$

$$R3 = R0(1 + KPa)$$

De même, pour la deuxième membrane 13' soumise à une pression Pb on a :

$$R1 = R0(1 - KPb)$$

$$R2 = R0(1 + KPb)$$

Le pont est alimenté par des moyens 37 d'alimentation en tension V. Le déséquilibre, c'est-à-dire la différence de potentiel $\Delta V$ du pont de Wheatstone est donné par la relation :

$$\frac{\Delta V}{V} = \frac{R_1 R_3 - R_2 R_4}{(R_1 + R_2)(R_3 + R_4)}$$

(au signe près suivant la convention des signes des tensions).

Les variations de résistance étant beaucoup plus petites que la valeur nominale des jauges ($\Delta R \ll R0$) on obtient l'équation (2) suivante :

$$\frac{\Delta V}{V} = \frac{K}{2}\left(Pa - Pb\right)$$

En combinant les équations (1) et (2) on trouve :

$$\frac{\Delta V}{V} = \frac{K}{2}\alpha Q \quad (3)$$

Pour les autres orientations relatives des jauges, on adaptera ces formules.
Comme déjà expliqué ci-dessus, d'une façon générale, il est préférable que les résistances ne soient pas toutes parallèles les unes des autres, et/ou que les résistances disposées une même membrane ne soient pas parallèles entre elles, et/ou que le pont de Wheastone formé par les quatre résistances comporte deux résistances successives parallèles l'une par rapport à l'autre.

L' équation (3) montre que la configuration en pont de Wheatstone décrite ci dessus permet de donner une relation directe entre le débit Q, et le déséquilibre mesuré sur le pont ΔV.

Ainsi, dans le cas de la structure de la figure 4C, on obtient l'équation (2') suivante, avec les mêmes significations pour les paramètres V, K, Pa et Pb:

$$\frac{\Delta V}{V} = \frac{K}{2}\left(Pa + Pb\right)$$

Par rapport à une structure telle que celle de la figure 2, un dispositif de mesure tel qu'il vient d'être décrit permet de réduire le nombre de connections électriques entre le capteur et son électronique associée (4 connexions au lieu de 8, chaque connexion correspondant à un sommet d'un pont).

Un autre avantage de cette structure est la réduction de l'énergie consommée par la mesure. En effet, chaque pont est alimenté électriquement et le fait de passer de 2 ponts (chaque pont associé à une chambre) à 1 seul pont permet de diviser par 2 la consommation d'énergie nécessaire à la mesure.

Le câblage des jauges d'un tel dispositif est lui aussi beaucoup plus simple que celui un dispositif selon l'art antérieur, ce qui simplifie la chaine de mesure. En outre un seul amplificateur 34 est nécessaire. Ceci représente un gain de place et une minimisation de consommation électrique : dans une configuration avec deux ponts, donc avec 3 amplificateurs 80, 80', 81, chaque amplificateur doit être alimenté. Par ailleurs le fait d'effectuer la mesure différentielle avant la chaine de mesure permet de réduire le risque de dégradation d'information et donc de minimiser l'incertitude de mesure liée à l'électronique du microdébitmètre.

Ces différents avantages sont particulièrement recherchés pour des applications médicales (implantables) où il est impératif de réduire la taille de l'électronique, de simplifier le traitement d'information et de réduire la consommation électrique, tout en gardant un niveau de sensibilité optimum. Par ailleurs, pour des débits avec des transitoires rapides (par exemple une pompe à membrane et clapet génère des pulses de débits) le calcul de la différence des mesures sur deux ponts de Wheatstone peut impliquer un traitement de signal complexe afin de ne pas perdre en sensibilité, ce problème ne se pose plus avec une mesure de débit à un seul pont.

On a représenté, en figure 5, la variante dans laquelle les cavités 41, 43 ont chacune une forme, dans le plan du dispositif, sensiblement carrée ou rectangulaire. Les autres références sur cette figure désignent des éléments identiques ou similaires à ceux qui ont déjà été décrits ci-dessus avec les autres figures. Une vue en coupe, selon l'axe AA', est identique à celle de la figure 3, et le schéma électrique de montage du pont de mesure est identique à celui décrit ci-dessus en liaison avec la figure 4B.

Chacune des cavités 41, 43 a une forme carrée ou rectangulaire, dont chaque côté est par exemple de l'ordre de quelques millimètres, par exemple compris entre 1 mm et 10 mm.

Les autres considérations ci-dessus, relatives aux dimensions des divers éléments de dispositif, aux matériaux qui peuvent être mis en œuvre, aux dispositions relatives des jauges, s'appliquent à cette variante.

Les figures 6A à 6F illustrent, en coupe transversale, différentes étapes d'un procédé de fabrication d'un microdébitmètre du type qui vient d'être décrit.

On considère un premier substrat 20 (figure 6A) formé, par exemple, à partir d'une plaque de silicium sur isolant (SOI pour Silicon On Insulator). Une couche de SiO2 20-2 est ainsi présente entre deux couches supérieure 20-1 et inférieure 20-3 de silicium.

On considère un deuxième substrat 30 (figure 6B) formé, par exemple, à partir d'une plaque de silicium polie double face.

L'épaisseur de chacun des premier et second substrats 20, 30 est de l'ordre de quelques centaines de microns, par exemple 700μm.

L'épaisseur de la couche inférieure 20-3 de silicium du premier substrat 20 est sensiblement égale à l'épaisseur des membranes déformables qui seront réalisées par la suite. Cette épaisseur peut ainsi être de l'ordre de quelques dizaines à quelques centaines de microns, par exemple 10μm à 300μm, et de préférence 50μm. Comme il sera détaillé plus loin, la couche inférieure 20-3 du premier substrat permet de définir avec précision l'épaisseur des membranes déformables qui seront réalisées.

On réalise d'abord les deux cavités 11, 13 dans la face supérieure du second substrat 30 (figure 6B) , ainsi que des conduits de communication 10, 14 et la restriction 12. Par cavité, on entend un évidement ou une échancrure pratiqué(e) dans la surface du second substrat 30.

Deux cavités 11, 13 sont ainsi obtenues.

Elles sont connectées entre elles par l'intermédiaire du conduit de communication 12. Les conduits 10 d'entrée et 14 de sortie leur permettront de recevoir un fluide dont le débit est à mesurer, puis d'éliminer ce fluide.

Des conduits d'entrée 15 et de sortie 16 sont réalisés sous forme de puits débouchant à l'intérieur, respectivement, des conduits de communication amont 10 et aval 14. À ce stade, ils sont de préférence non encore traversant vis-à-vis du second substrat 30. Ils peuvent être situés au centre des cavités (car ils sont de préférence destinés à déboucher au centre des cavités). Ils peuvent avoir un diamètre, mesuré dans le plan du substrat, de l'ordre de quelques centaines de microns, ou compris entre 100 $\mu$m et 800 $\mu$m, par exemple 600$\mu$m, et une profondeur p de l'ordre de quelques centaines de microns, ou comprise entre 100 $\mu$m et 500 $\mu$m, par exemple 300$\mu$m.

La réalisation des cavités, des conduits de communication et des conduits d'entrée 15 et de sortie 16 dans le second substrat 30 est effectuée à partir de la face supérieure 30' de ce substrat, par des techniques classiques de microélectronique, par exemple par photolithographie suivie d'une étape de gravure. La gravure peut être réalisée par plasma du type RIE (*Rayonic Ion Etching*), ce qui permet d'obtenir des parois verticales. Ces divers éléments peuvent avoir les formes et dimensions déjà indiquées ci-dessus. La forme est définie à l'aide du ou des masques utilisés lors des opérations de photolithographie et de gravure.

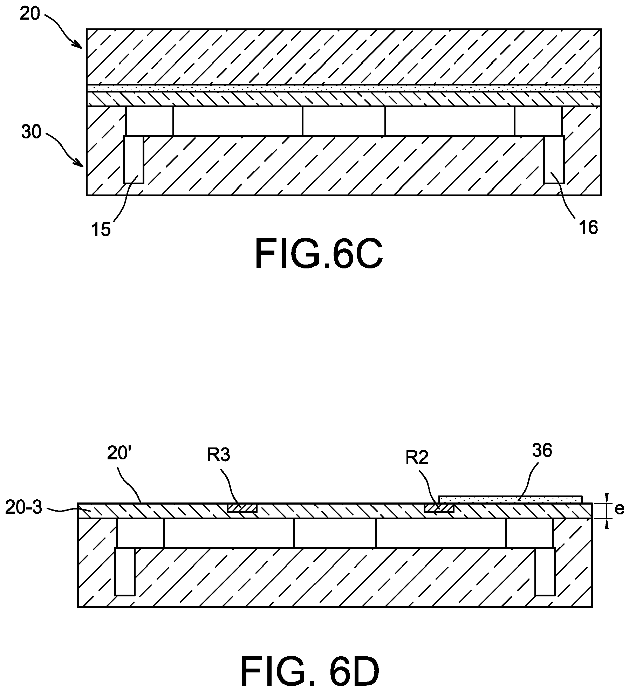

On assemble ensuite les 2 substrats 20, 30 l'un à l'autre (figure 6C), la couche inférieure 20-3 du substrat 20 étant assemblée avec la face 30' supérieure du substrat 30, par laquelle les diverses cavités 10-14 ont été gravées.

Selon un mode de réalisation préférée, les premier et second substrats 20, 30 étant respectivement en silicium et en SOI, il est possible d'effectuer un assemblage par scellement moléculaire. Cette technique est également appelée scellement par fusion, ou scellement direct de silicium. D'autres exemples de techniques pouvant être mises en oeuvre pour l'assemblage ont été donnés ci-dessus.).

Cet assemblage par scellement moléculaire comporte une première phase de préparation des faces des substrats 20, 30 destinées à être assemblées, plus précisément de nettoyage et d'hydratation.

Les faces à assembler des 2 substrats 20, 30 sont ainsi nettoyées par un traitement humide tel que le nettoyage RCA, décrit notamment dans l'ouvrage de Maluf et Williams intitulé « *An introduction* to *microelectromechanical systems engineering* ». Cette technique de nettoyage permet d'obtenir des surfaces propres et non contaminées, présentant une forte densité de groupements OH. Les substrats sont ensuite alignés puis mis en contact l'un avec à l'autre.

On effectue ensuite un recuit de scellement à haute température pendant une durée déterminée. La température peut être comprise entre 500°C et 1250°C, par exemple de l'ordre de 1000°C et la durée de recuit peut être de l'ordre d'une heure. L'assemblage des substrats ainsi obtenu est alors solide et durable.

Lors de cet assemblage, le premier substrat 20 n'a pas encore été traité de manière à obtenir la membrane déformable. L'épaisseur du premier substrat 20 est donc sensiblement identique à son épaisseur initiale, soit quelques centaines de microns. Aussi, la manipulation du premier substrat 20 avant et pendant l'étape d'assemblage présente des faibles risques de dégradation par cassure ou déchirure.

Enfin, il est à noter que, lors de cet assemblage, les conduits d'entrée 15 et de sortie 16 peuvent ne pas être traversant. Dans ce cas, l'étape d'assemblage est avantageusement effectuée sous vide.

La pression ambiante peut être comprise, par exemple, entre quelques $10^{-4}$ mbar et quelques $10^{-2}$ mbar. Cela permet d'éviter que, par dilatation thermique de gaz emprisonné dans le volume clos formé par les cavités 11, 13 et conduits 10, 12, 14, 15, 16, des surpressions importantes n'engendrent des contraintes mécaniques excessives à l'intérieur des substrats, mais également dans la zone d'assemblage entre les deux substrats.

On réalise enfin les membranes déformables dans le premier substrat 20 (figure 6D), par amincissement de celui-ci sur toute sa surface, à partir de sa face supérieure (celle qui est opposée à la face de la couche 20-3 qui à été assemblée avec le second substrat 30).

À cette fin, une première phase de polissage mécanique du type meulage peut être effectuée. Cette technique est notamment décrite dans l'article de Pei et al. intitulé « Grinding of silicon wafers: A review from historical perspectives », Int. J. Mach. Tool. Manu., 48 (2008), 1297-1307.

Le polissage peut être arrêté à quelques microns ou dizaines de microns au-dessus de la couche intermédiaire 20-2 de SiO2.

L'amincissement jusqu'à la couche intermédiaire 20-2 peut être obtenu par la technique connue du polissage mécano-chimique de type CMP (acronyme en anglais de *Chemical Mechanical Polishing).*

Alternativement ou en combinaison avec cette technique, une gravure sèche de type RIE et/ou une gravure humide au moyen d'un bain de KOH ou de TMAH (tetramethylammonium hydroxide) peut(peuvent) être effectuée(s). Dans le cas de la gravure sèche ou humide, la couche 20-2 de SiO2 présente l'avantage de servir de couche d'arrêt, ce qui permet de contrôler avec précision l'épaisseur finale de la membrane à former.

Enfin, la couche intermédiaire 20-2 de SiO2 du second substrat 20 peut être elle-même gravée par une gravure sèche de type RIE ou par attaque chimique à l'acide fluorhydrique (HF).

Comme l'illustre la figure 6D, le premier substrat 20 est alors essentiellement réduit à sa couche inférieure 20-3 et présente une face supérieure 20' sensiblement plane. Cette couche ne présente pas de zones géométriquement définies destinées à former des membranes déformables. Du fait de l'épaisseur e de cette couche, de l'ordre de quelques dizaines à quelques centaines de microns, par exemple 10$\mu$m à 300$\mu$m, et de préférence 50$\mu$m, toute zone de cette couche est susceptible de former une membrane déformable. Ce sont les zones de cette couche situées en regard des cavités 11, 13 qui vont former les membranes déformables au-dessus de chacune des cavités.

Les moyens de détection (résistances R1 - R4, connexions 36) peuvent ensuite être réalisés par un niveau conducteur sur la face supérieure 20' de la couche 20-3. Ce niveau conducteur peut être en un des matériaux déjà indiqués ci-dessus, et obtenu par toute technique de dépôt disponible dans des salles blanches, ou par implantation d'ions dans un matériau semiconducteur. Les jauges sont alors réalisées directement dans le matériau des membranes. On peut aussi utiliser la technique décrite dans le document WO 2010/92092.

En variante encore on peut réaliser les jauges R1 - R4 en déposant une couche de polysilicium à la surface des membranes. Une telle technique est présentée dans l'article de Malhaire et al. intitulé « Design of a polysilicon-on-insulator pressure sensor with original polysilicon layout for harsh environment », 2003, Thin Solid Films, 427, 362-366.

Des interconnexions 36, réalisées sur la membrane 20-3, de préférence de la même manière que les jauges de contrainte R1 - R4, relient électriquement celles-ci pour former le pont de Wheatstone et connecter l'ensemble à des moyens de traitement 34, 35 et à des moyens d'alimentation 37 (figure 4B).

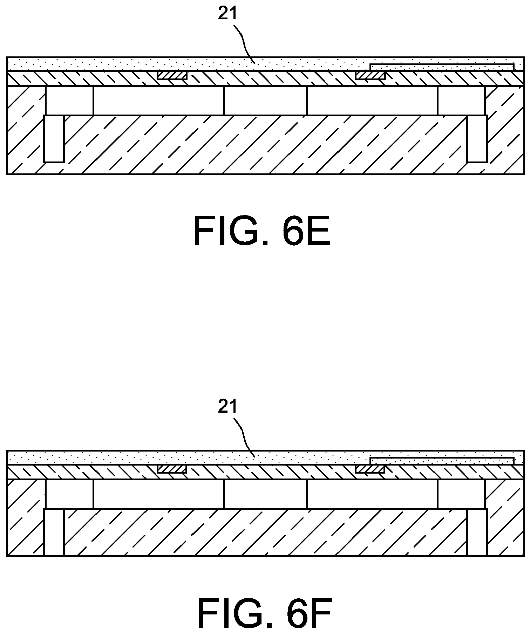

La figure 6E montre qu'une couche 21, électriquement isolante, par exemple à base d'un diélectrique tel que du Si02, peut être disposée sur le substrat, recouvrant ainsi les jauges de contraintes R1 - R4 et les interconnexions 36.

D'autres capteurs de déformations peuvent être réalisés à ce stade sur les membranes 11', 13', par exemple afin de mesurer la pression dans l'une et/ou l'autre des membranes.

Dans un mode de réalisation préféré du procédé selon l'invention, les conduits d'entrée 15 et de sortie 16 ne sont pas encore traversant. Une étape de gravure est alors réalisée sur la face inférieure du second substrat 30 (figure 6F) pour rendre traversant lesdits conduits. Le circuit fluidique du microdébitmètre, comportant les conduits d'entrée 15 et de sortie 16, les cavités 11, 13 ainsi que des conduits de communication 10, 12 et 14, est alors ouvert et communique avec l'environnement extérieur.

Cette étape est avantageusement réalisée au terme du procédé de fabrication. Cela permet d'éviter la contamination de l'intérieur du circuit fluidique par toutes sortes de résidus ou d'impuretés. Le risque de bouchage ou de pollution de l'ensemble du réseau est ainsi écarté.

Un avantage d'un procédé selon l'invention est qu'il ne nécessite de graver qu'une seule des deux faces à mettre en contact lors de l'opération d'assemblage de la figure 6C. Au contraire, une structure telle que celle de la figure 1 met en œuvre une gravure des substrats 62, 64.

Enfin, dans le cas où une pluralité de microdébitmètres est fabriquée simultanément à partir d'une plaque formant le premier substrat et d'une seconde plaque formant le second substrat, les plaques sont découpées pour individualiser les composants ainsi fabriqués.

**Revendications**

1. Microdébitmètre pour la mesure du débit d'un fluide, comportant une première chambre (11) et une deuxième chambre (13) et un canal (12) reliant la première chambre (11) et la deuxième chambre (13):

   - la première chambre étant munie d'une paroi comportant une première membrane déformable (11'), qui s'étend dans le sens de circulation d'un fluide dans la première chambre, et d'une première et deuxième jauges (R1, R2), sur ou dans la première membrane déformable;
   - la deuxième chambre (13) étant munie d'une paroi comportant une deuxième membrane déformable (13'), qui s'étend dans le sens de circulation d'un fluide dans la deuxième chambre, et d'une troisième et quatrième jauges (R3, R4), sur ou dans la deuxième membrane déformable,

   **caractérisé en ce que** :

   - les quatre jauges forment un pont de Wheatstone permettant de mesurer un différentiel de pression entre la première chambre et la deuxième chambre lorsque le fluide s'écoule par la première chambre, puis par le canal, puis par la deuxième chambre,
   - le microdébitmètre comportant en outre un système électronique de mesure (34, 35) apte à mesurer ledit différentiel de pression et à déterminer le débit du fluide à partir du différentiel de pression mesuré.

2. Microdébitmètre selon la revendication 1, les 4 jauges (R1, R2, R3, R4) ayant des valeurs nominales identiques.

3. Microdébitmètre selon la revendication 1 ou 2, chacune des 4 jauges étant de forme allongée, les 4 jauges dudit pont de Wheatstone n'étant pas toutes parallèles les unes des autres, et/ou les 2 jauges d'une même membrane qui font partie du pont de Wheatstone n'étant pas parallèles entre elles, et/ou le pont de Wheatstone comportant deux jauges successives parallèles l'une par rapport à l'autre.

4. Microdébitmètre selon l'une des revendications 1 à 3, l'une des jauges de chaque membrane étant placée suivant une direction perpendiculaire à la direction générale d'écoulement d'un fluide dans le dispositif, tandis que l'autre jauge est placée suivant une direction sensiblement parallèle à cette direction générale d'écoulement du fluide dans le dispositif.

5. Microdébitmètre selon l'une des revendications 1 à 4, les 2 membranes étant identiques.

6. Microdébitmètre selon l'une des revendications 1 à 5, chacune des jauges :

   - étant localisée au voisinage de l'encastrement ou du bord de la membrane correspondante ;
   - et/ou étant en un matériau conducteur ou en un matériau semi-conducteur dopé ;
   - et/ou ayant une largeur comprise entre 1 $\mu$m et 10 $\mu$m et une longueur comprise entre 10 $\mu$m et 100 $\mu$m.

7. Microdébitmètre selon l'une des revendications 1 à 6, comportant en outre au moins un capteur supplémentaire de mesure de pression dans au moins l'une des chambres.

8. Microdébitmètre selon l'une des revendications 1 à 7, les membranes déformables (11', 13') ayant une épaisseur comprise entre 10 $\mu$m et 300 $\mu$m.

9. Microdébitmètre selon l'une des revendications 1 à 8, comportant des moyens amplificateurs (34) auxquels sont connectés 2 sommets du pont qui ne sont pas disposés de manière voisine dans le pont.

10. Procédé de réalisation d'un microdébitmètre selon l'une des revendications 1 à 9, comportant les étapes suivantes :

    a) on sélectionne un premier substrat (20) et un deuxième substrat (30),
    b) on réalise la première chambre (11), la deuxième chambre (13) et le canal (12) dans le deuxième substrat (30),
    c) on assemble le premier substrat (20) avec le deuxième substrat (30),
    d) puis on réalise une membrane déformable (11', 13'), par amincissement du premier substrat (20),
    e) on forme les 4 jauges (R1, R2, R3 , R4), formant un pont de Wheatstone, sur ou dans ladite membrane, deux des jauges étant positionnées au-dessus de la première chambre (11) et les deux autres jauges étant positionnées au-dessus de la deuxième chambre (11).

11. Procédé selon la revendication 10, la membrane déformable étant réalisée par amincissement du premier substrat (20) à partir de la face supérieure (21S) de celui-ci, par polissage mécanique, ou par polissage mécano-chimique et/ou par gravure.

12. Procédé selon la revendication 10 ou 11, le premier substrat (20) étant de type SOI, comportant un substrat semi-conducteur (20-1), une couche diélectrique (20-2) et une couche en matériau semi-conducteur (20-3), la couche diélectrique (20-2) pouvant éventuellement servir de couche d'arrêt lors de l'amincissement du deuxième substrat.

13. Procédé selon l'une des revendications 10 à 12, comportant en outre une étape de réalisation de conduits d'entrée (15) et de sortie (16) dans le deuxième substrat (30), les conduits d'entrée (15) et de sortie (16) pouvant éventuellement être d'abord réalisés borgnes dans le deuxième substrat (30), puis être rendus traversant après l'étape e), par amincissement du deuxième substrat.

14. Procédé selon l'une des revendications 10 à 13, l'étape d'assemblage étant réalisée par scellement moléculaire, ou par scellement anodique, ou eutectique, ou par collage, cet étape d'assemblage pouvant éventuellement être réalisée sous vide.

15. Procédé selon l'une des revendications 10 à 14, les jauges étant réalisées par dépôt métallique sur la membrane ou par dopage d'un matériau semi-conducteur.

**Patentansprüche**

1. Mikrodurchflussmesser für das Messen der Durchflussmenge eines Fluids, umfassend eine erste Kammer (11) und eine zweite Kammer (13) und einen Kanal (12), der die erste Kammer (11) und die zweite Kammer (13) verbindet:

- wobei die erste Kammer über Folgendes verfügt: eine Wand, die eine erste verformbare Membran (11'), die sich in der Strömungsrichtung eines Fluids in der ersten Kammer erstreckt, umfasst, und einen ersten und zweiten Messstreifen (R1, R2) an oder in der ersten verformbaren Membran;
- wobei die zweite Kammer (13) über Folgendes verfügt: eine Wand, die eine zweite verformbare Membran (13'), die sich in der Strömungsrichtung eines Fluids in der zweiten Kammer erstreckt, umfasst, und einen dritten und vierten Messstreifen (R3, R4) an oder in der zweiten verformbaren Membran,

**dadurch gekennzeichnet, dass**:

- die vier Messstreifen eine Wheatstone-Brücke bilden, die es gestattet, eine Druckdifferenz zwischen der ersten Kammer und der zweiten Kammer zu messen, wenn das Fluid durch die erste Kammer, dann durch den Kanal, dann durch die zweite Kammer fließt,
- wobei der Mikrodurchflussmesser ferner ein elektronisches Messsystem (34, 35) umfasst, das fähig ist, die Druckdifferenz zu messen und die Durchflussmenge des Fluids auf Grundlage der gemessenen Druckdifferenz zu bestimmen.

2. Mikrodurchflussmesser nach Anspruch 1, wobei die 4 Messstreifen (R1, R2, R3, R4) identische Nennwerte aufweisen.

3. Mikrodurchflussmesser nach Anspruch 1 oder 2, wobei jeder der 4 Messstreifen eine längliche Form aufweist, wobei die 4 Messstreifen der Wheatstone-Brücke nicht alle zueinander parallel sind und/oder wobei 2 Messstreifen einer gleichen Membran, die Teil der Wheatstone-Brücke sind, nicht untereinander parallel sind und/oder wobei die Wheatstone-Brücke zwei aufeinanderfolgende Messstreifen umfasst, die in Bezug aufeinander parallel sind.

4. Mikrodurchflussmesser nach einem der Ansprüche 1 bis 3, wobei einer der Messstreifen jeder Membran gemäß einer zu der allgemeinen Strömungsrichtung eines Fluids in der Vorrichtung senkrechten Richtung platziert ist, während der andere Messstreifen gemäß einer zu dieser allgemeinen Strömungsrichtung des Fluids in der Vorrichtung im Wesentlichen parallelen Richtung platziert ist.

5. Mikrodurchflussmesser nach einem der Ansprüche 1 bis 4, wobei die 2 Membranen identisch sind.

6. Mikrodurchflussmesser nach einem der Ansprüche 1 bis 5, wobei jeder der Messstreifen:

- sich in der Nähe der Einfassung oder des Rands der entsprechenden Membran befindet;
- und/oder aus einem leitenden Material oder aus einem dotierten Halbleitermaterial besteht;
- und/oder eine Breite, die zwischen 1 $\mu$m und 10 $\mu$m liegt, und eine Länge, die zwischen 10 $\mu$m und 100 $\mu$m liegt, aufweist.

7. Mikrodurchflussmesser nach einem der Ansprüche 1 bis 6, ferner umfassend mindestens einen zusätzlichen Druckaufnehmer in mindestens einer der Kammern.

8. Mikrodurchflussmesser nach einem der Ansprüche 1 bis 7, wobei die verformbaren Membranen (11', 13') eine Dicke aufweisen, die zwischen 10 $\mu$m und 300 $\mu$m liegt.

9. Mikrodurchflussmesser nach einem der Ansprüche 1 bis 8, umfassend Verstärkungsmittel (34), mit denen 2 Knotenpunkte der Brücke verbunden sind, die in der Brücke nicht benachbart angeordnet sind.

10. Verfahren zur Herstellung eines Mikrodurchflussmessers nach einem der Ansprüche 1 bis 9, umfassend die folgenden Schritte:

a) Auswählen eines ersten Substrats (20) und eines zweiten Substrats (30),
b) Herstellen der ersten Kammer (11), der zweiten Kammer (13) und des Kanals (12) in dem zweiten Substrat (30),
c) Zusammenfügen des ersten Substrats (20) mit dem zweiten Substrat (30),
d) anschließend Herstellen einer verformbaren Membran (11', 13') durch Dünnermachen des ersten Substrats (20),

e) Bilden der 4 Messstreifen (R1, R2, R3, R4), die eine Wheatstone-Brücke bilden, an oder in der Membran, wobei zwei der Messstreifen über der ersten Kammer (11) positioniert werden und die zwei anderen Messstreifen über der zweiten Kammer (11) positioniert werden.

**11.** Verfahren nach Anspruch 10, wobei die verformbare Membran durch Dünnermachen des ersten Substrats (20) ausgehend von der oberen Fläche (21S) desselben durch mechanisches Polieren oder durch chemisch-mechanisches Polieren und/oder durch Ätzen hergestellt wird.

**12.** Verfahren nach Anspruch 10 oder 11, wobei das erste Substrat (20) vom SOI-Typ ist, umfassend ein Halbleitersubstrat (20-1), eine dielektrische Schicht (20-2) und eine Schicht aus einem Halbleitermaterial (20-3), wobei die dielektrische Schicht (20-2) beim Dünnermachen des zweiten Substrats gegebenenfalls als Sperrschicht dienen kann.

**13.** Verfahren nach einem der Ansprüche 10 bis 12, ferner umfassend einen Schritt des Herstellens einer Einlass- (15) und einer Auslassleitung (16) in dem zweiten Substrat (30), wobei die Einlass- (15) und die Auslassleitung (16) gegebenenfalls zuerst als Blindleitungen in dem zweiten Substrat (30) hergestellt werden können und dann nach dem Schritt e) durch Dünnermachen des zweiten Substrats durchgängig gemacht werden können.

**14.** Verfahren nach einem der Ansprüche 10 bis 13, wobei der Schritt des Zusammenfügens durch molekulares Bonden oder durch anodisches oder eutektisches Bonden oder durch Kleben durchgeführt wird, wobei dieser Schritt des Zusammenfügens gegebenenfalls unter Vakuum durchgeführt werden kann.

**15.** Verfahren nach einem der Ansprüche 10 bis 14, wobei die Messstreifen durch metallisches Abscheiden auf der Membran oder durch Dotieren eines Halbleitermaterials hergestellt werden.

**Claims**

**1.** A flowmeter for measuring a fluid flow rate, comprising a first chamber (11) and a second chamber (13), and a channel (12) connecting said first chamber (11) and said second chamber (13):

- the first chamber being provided with a wall including a first deformable membrane (11'), which extends in the direction of flow of a fluid in the first chamber, and with first and second gauges (R1, R2), on or in the first deformable membrane;
- the second chamber (13) being provided with a wall including a second deformable membrane (13'), which extends in the direction of flow of a fluid in the second chamber, and with third and fourth gauges (R3, R4), on or in the second deformable membrane,

**Characterized in that** :

- the four gauges form a Wheatstone bridge with which a pressure difference between the first chamber and the second chamber may be measured when a fluid flows through the first chamber, and then through the channel, and then through the second chamber.
- the flowmeter further comprising an electronic measurement system (34, 35), able to measure said pressure difference and to determine the fluid flow rate from the measured pressure difference.

**2.** The flowmeter according to claim 1, the 4 gauges (R1, R2, R3, R4) having identical rated values.

**3.** The flowmeter according to claim 1 or 2, each of the 4 gauges having an elongated shape, the 4 gauges of said Wheatstone bridge not all being parallel with each other, and/or the 2 gauges of a same membrane which form part of the Wheatstone bridge not being parallel with each other and/or the Wheatstone bridge including 2 successive gauges parallel with each other.

**4.** The flowmeter according to one of claims 1 to 3, one of the gauges of each membrane being placed along a direction perpendicular to the general direction of flow of a fluid in the device, while the other gauge is placed along a direction substantially parallel to this general direction of flow of fluid in the device.

**5.** The flowmeter according to one of claims 1 to 4, the 2 membranes being identical.

6. The flowmeter according to one of claims 1 to 5, each of the gauges:

   - being localized in the vicinity of the anchoring or of the edge of the corresponding membrane;
   - and/or being in a conducting material or in a doped semiconducting material;
   - and/or having a width comprised between 1 μm and 10 μm and a length comprised between 10 μm et 100 μm.

7. The flowmeter according to one of claims 1 to 6, further including at least one additional sensor for measuring pressure in at least one of the chambers.

8. The flowmeter according to one of claims 1 to 7, the deformable membranes (11', 13') having a thickness comprised between 10 μm and 300 μm.

9. The flowmeter according to one of claims 1 to 8, comprising amplifier means (34) to which are connected 2 apices of the bridge which are not positioned in the vicinity of each other in the bridge.

10. A method for making a flowmeter according to one of claims 1 to 9, including the following steps:

    a) a first substrate (20) and a second substrate (30) are selected,
    b) the first chamber (11), the second chamber (13) and the channel (12) are made in the second substrate (30),
    c) the first substrate (20) is assembled with the second substrate (30),
    d) a deformable membrane (11', 13') is then made by thinning the first substrate (20),
    e) the 4 gauges (R1, R2, R3, R4), forming a Wheatstone bridge, are formed on or in said membrane, two of the gauges being positioned above the first chamber (11) and the two other gauges being positioned above the second chamber (11).

11. The method according to claim 10, the deformable membrane being made by thinning the first substrate (20) from the upper face (21S) of the latter, by mechanical polishing, or by mechano-chemical polishing and/or by etching.

12. The method according to claim 10 or 11, the first substrate (20) being of the SOI type, including a semiconducting substrate (20-1), a dielectric layer (20-2) and a layer in semiconducting material (20-3), the dielectric layer (20-2) being able to be used as a stopping layer during the thinning of the second substrate.

13. The method according to any of claims 10 to 12, further including a step for making inlet (15) and outlet (16) conduits in the second substrate (30), the inlet (15) and outlet (16) conduits possibly first being made blind in the second substrate (30), and then made as through-conduits after step e), by thinning of the second substrate.

14. The method according to any of claim 10 to 13, the assembling step being carried out by molecular sealing, or by anodic, or eutectic sealing or by adhesive bonding, the assembling step being possibly carried out *in vacuo*.

15. The method according to one of claims 10 to 14, the gauges being made by metal deposition on the membrane or by doping a semiconducting material.

FIG. 1

FIG. 2

FIG. 3

FIG. 4A

FIG. 4B

FIG. 4C

**FIG. 5**

**FIG. 6A**

**FIG. 6B**

20

30

15

16

**FIG.6C**

20'

R3

R2

36

20-3

e

**FIG. 6D**

21

FIG. 6E

21

FIG. 6F

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6446513 B1
- US 20050204828 A1
- WO 2007143258 A
- EP 1236974 A
- WO 201092092 A

**Littérature non-brevet citée dans la description**

- **OOSTERBROEK et al.** *Sensor Actuat a-Phys,* 1999, vol. 77, 167
- **CHO et al.** a high-performance microflowmeter with built-in self test. *Sensors and Actuators A: Physical,* 1993, vol. 36, 47-56
- **A J VAN DER WIE et al.** *a bi directional silicon orifice flow sensor for fluid temperature and pressure,* 25 Juin 1995, vol. 2, 420-423
- A MEMS flow sensor and its application in adaptative liquid dispensing. **LIU YAXIN.** MEASURING TECHNOLOGY AND MECHATRONICS AUTOMATION 2009, ICMTMA '09. IEEE, 11 Avril 2009, 3-7
- **PEI et al.** Grinding of silicon wafers: A review from historical perspectives. *Int. J. Mach. Tool. Manu.,* 2008, vol. 48, 1297-1307
- **MALHAIRE et al.** Design of a polysilicon-on-insulator pressure sensor with original polysilicon layout for harsh environment. *Thin Solid Films,* 2003, vol. 427, 362-366